# EUROPEAN PATENT APPLICATION

(11) **EP 4 324 630 A1**
(43) Date of publication of application: **21.02.2024**
(21) Application number: 22190739.7
(22) Date of filing: 17.08.2022
(51) Int. Cl.: B29D 11/00, B29C 64/112

(54) **METHOD FOR PRODUCING A THREE-DIMENSIONAL OPTICAL STRUCTURE AND SYSTEM FOR PRODUCING A THREE-DIMENSIONAL OPTICAL STRUCTURE**

(71) Applicant: Meta Platforms Technologies, LLC, Menlo Park, CA 94025 (US)
(72) Inventor: VAN DEN BERGH, John-John, Eindhoven (NL)
(74) Representative: Murgitroyd & Company

(57) **Abstract**

A method for producing a three-dimensional optical structure, in particular an ophthalmic lens, is proposed, wherein at least one layer is printed on a substrate by depositing droplets of printing ink at predetermined locations, wherein the droplets are ejected by at least one nozzle of a print head along a trajectory towards the predetermined locations, wherein the print head, in particular the at least one nozzle, is controlled such that a volume of each droplet is adjusted in dependence of the distance between the nozzle and the corresponding predetermined location, wherein in particular the volume is increased when the distance increases.

## Description

### BACKGROUND

The present invention relates to a method for producing a three-dimensional optical structure, in particular an ophthalmic lens, wherein at least one layer is printed on a substrate by depositing droplets of printing ink at predetermined locations, wherein the droplets are ejected by at least one nozzle of a print head along a trajectory towards the predetermined locations.

Printed three-dimensional optical structures such as ophthalmic lenses are well known from the prior art. In recent years, with the rise of rapid prototyping and in particular additive manufacturing, it has become clear that such optical structures can easily be produced by three-dimensional printing such as described above. An advantage of three-dimensionally printed optical structures, especially with regard to individual customizability and the possibilities of special uses. Not only is it easy to finely tune optical functions of the optical structures during their production, but the optical structures may also be specially adapted for the integration of functional components such as e.g. waveguides and/or displays.

The known methods of three-dimensional printing usually comprise a print head with at least one nozzle ejecting droplets of printing ink towards a substrate. By depositing a multitude of droplets, a layer is created. The printing ink solidifies and the process may be repeated to deposit multiple layers. The droplets comprise a certain volume and are therefore prone to external influences. An air draft may e.g. deviate the droplets from their predetermined trajectory or the droplets may nebulize, i.e. break into a plurality of smaller subdroplets. In order to minimize such influences, the distance between the print head and the subject upon which the layer is to be printed is kept as small as possible, hence improving the printing accuracy.

Yet, depending on the predetermined shape of the layer and/or the shape of the substrate, the distance between the nozzle and the substrate at any given point may not be constant. If the distance becomes too large, the printing accuracy deteriorates.

### SUMMARY

Hence, it is a purpose of the present invention to provide a method for producing a three-dimensional optical structure, in particular an ophthalmic lens, with an improved printing accuracy, in particular when printing non-flat layers.

According to the present invention, this object is achieved by a method for producing a three-dimensional optical structure, in particular an ophthalmic lens, wherein at least one layer is printed on a substrate by depositing droplets of printing ink at predetermined locations, wherein the droplets are ejected by at least one nozzle of a print head along a trajectory towards the predetermined locations, wherein the print head, in particular the at least one nozzle, is controlled such that a volume of at least one, in particular each, droplet is adjusted in dependence of the distance between the nozzle and the corresponding predetermined location, wherein in particular the volume is increased when the distance increases.

The method according to the invention advantageously allows for the production of an optical structure, in particular an ophthalmic lens, with high accuracy, regardless of the shape of the layer and/or the substrate.

The embodiments and advantages described in conjunction with this subject matter of the present invention also apply to the further subject matter of the present invention and vice versa.

Preferably, the optical structure is a three-dimensional structure intended to at least partially transmit light. The optical structure is more preferably intended for use with the visible spectrum. Preferably, the optical structure is at least partially optically transparent, in particular at least for a predetermined range of wavelengths, such as the visible spectrum. In particular, the optical structure may be a lens and even more preferably an ophthalmic lens. Ophthalmic lenses comprise concave, convex, biconcave, biconvex, plano-concave, plano-convex and meniscus lenses. Ophthalmic lenses in the sense of the present invention also comprise multifocal lenses as well as gradient-index lenses. Ophthalmic lenses comprise in particular spectacle lenses or other lenses that are used in eyewear.

Preferably, the printing ink comprises a translucent or transparent component. More preferably, the printing ink comprises at least one photo-polymerizable component. The at least one photo-polymerizable component is most preferably a monomer that polymerizes upon exposure to radiation, e.g. ultra-violet (UV) light.

The deposited droplets are preferably pin cured, i.e. partially cured, after deposition. More preferably, the viscosity of the printing ink is increased during curing. Pin curing is most preferably carried out after deposition of the respective droplet or after deposition of an entire (sub)layer or only part of a layer. Alternatively, pin curing is carried out at certain intervals, e.g. after printing of every second (sub)layer. It is desirable that the optical structure is at least partly translucent and/or transparent. Preferably, curing may comprise actively and/or passively curing the printing ink, wherein in particular passively curing includes letting the droplets dry or cure, i.e. generally speaking solidify, over time, whereas actively curing includes acting upon the deposited droplets, e.g. submitting the droplets to additional energy such as electromagnetic radiation, in particular UV light.

Within the context of the present invention, it is preferred that for a specific layer, a single printing ink is used. This means in particular that regardless of the droplet volume, the same printing ink is used. Alternatively, it is also conceivable that the printing ink differs at least partially for different droplet volumes and/or for different layers. E.g. a layer constituting bulk of the optical structure is printed with a different printing ink than a hard coating layer and/or an anti-reflective coating layer. Additionally or alternatively, at least one component of the printing ink is at least partially different and/or the composition of the printing ink is at least partly different for different droplet volumes. It is thus advantageously possible to adjust the printing conditions in dependence of the distance between the nozzle and the substrate (at the predetermined deposition location).

According to a preferred embodiment of the present invention, the layer is at least partially printed in a multi-pass printing mode, wherein a layer printed in a multi-pass printing mode preferably comprises multiple sublayers which are printed in subsequent sublayer printing steps, wherein at least one sublayer printing step is followed by an at least partial curing step. This allows in a very advantageous manner for a highly flexible and customizable production of an optical structure. A multi-pass printing mode preferably comprises the printing head making several passes, in particular back and/or forth, wherein during each pass, a sublayer of the layer is printed. Each sublayer may be subjected to a separate curing step, only the completed layer may be subjected to a curing step or a curing step is performed in regular or irregular intervals, e.g. as soon as a predetermined amount of sublayers are printed and/or after a predetermined time after printing has passed. Alternatively or additionally, at least one layer is printed in a multi-pass printing mode, wherein at least one further layer is printed in a non-multi-pass printing mode, in particular in a single-pass mode. By including a multi-pass printing mode, it is advantageously possible to correct errors in the optical structure. This process is detailed in the previous application EP 3722073 A1 of the present applicant. The disclosure of the aforementioned application with regard to multi-pass printing is therefore incorporated in the present disclosure.

According to a preferred embodiment of the present invention, the droplets comprise a first volume if the distance between the nozzle and the corresponding predetermined location is smaller than or equal to a first threshold distance, and wherein the print head, in particular the at least one nozzle, is controlled such that the droplets comprise a second volume if the distance between the nozzle and the corresponding predetermined location is greater than the first threshold distance and preferably smaller than or equal to a second threshold distance, wherein the second volume is greater than the first volume. It is thus advantageously possible to achieve a very high printing accuracy with only two different droplet volumes. In particular when printing optical structures such as ophthalmic lenses, the overall dimensions of the optical structures are usually rather limited. It is therefore sufficient to define a (first) threshold distance at which printing accuracy starts to deteriorate for a fixed droplet volume. At larger distances than the first threshold distance, using the second droplet volume reduces the impact of external influences sufficiently to maintain a high printing accuracy.

According to another preferred embodiment of the present invention, the print head, in particular the at least one nozzle, is controlled such that the droplets comprise a third volume if the distance between the nozzle and the predetermined location is greater than the second threshold distance and preferably equal to or smaller than a third threshold distance, wherein in particular the third volume is greater than the second volume. This is particularly advantageous if strong external influences are impacting the droplet trajectory and/or if the distances between the nozzle and the predetermined locations become very large over lateral extension of the layer, e.g. if the layer is strongly curved. Additionally, it is possible to define further threshold distances and droplet volumes, such as a fourth, fifth, sixth, etc. threshold distance and a fourth, fifth, sixth, etc. droplet volume.

According to a preferred embodiment of the present invention, during printing of the at least one layer, the droplets are deposited at least partially side by side and preferably at least partially on top of each other, wherein preferably successive layers of printing ink are a least partially printed one above the other in consecutive printing steps. In the context of the present invention, printing of an optical structure comprises building up the structure from layers of printing ink. These are obtained through a targeted placement of droplets of printing ink at least partially side by side according to predetermined print data. The print data preferably comprises slicing data, wherein in particular, a predetermined shape of the optical structure is converted into print data by dividing it into a plurality of layers, i.e. slices, which are at least partially stacked upon each other.

According to a preferred embodiment of the present invention, the substrate comprises a curved upper surface on which the at least one layer is printed and/or wherein the layer is a curved layer. More preferably, a curved layer is printed upon a curved upper surface of the substrate, wherein the form and/or shape of the layer substantially corresponds to the form and/or shape of the upper surface of the substrate. In particular for highly/strongly curved layers the method according to the present invention is advantageous, as it allows for a constant and high printing accuracy over the entire (lateral) extension of the layer, regardless of the respective distances between the nozzle ejecting a droplet of printing ink and the corresponding predetermined location at which the droplet is to be deposited.

According to a preferred embodiment of the present invention, the substrate is a lens blank, a printed base structure, a waveguide and/or a display. In particular, the layer is printed upon a base layer, wherein the base layer is (three-dimensionally) printed upon a substrate. This is particularly advantageous as the resulting surface, upon which the layer is printed, may be produced such as to comprise a very smooth surface, which is of particular importance for high-quality optical structures. Furthermore, the material of the base layer may be chosen such as to allow for an optimal bonding to both the substrate on the one side and the layer on the other side. Preferably, the substrate comprises glass and/or a polymer, in particular cellulose triacetate (TAC), cyclic olefin copolymer (COC), polyethylene terephthalate (PET), polycarbonate (PC) and/or Polymethyl methacrylate (PMMA), which is also known as acrylic glass or plexiglass. Those materials are well-known and tested materials for optical purposes and therefore particularly suited for the production of the optical structure according to the present invention.

According to a preferred embodiment of the present invention, the print head comprises multiple nozzles which are preferably controlled at least partially independently of each other. Preferably, the three-dimensional printing is a multi-jet printing. It is thus advantageously possible to enhance the printing speed by ejecting nozzles from a plurality of nozzles at once. In particular by determining the distance between a nozzle and the corresponding predetermined location of deposition for each nozzle individually and adjusting the volume of the droplet ejected by each nozzle accordingly, the overall printing accuracy is advantageously enhanced.

According to a preferred embodiment of the present invention, the droplet volume is adjusted linearly, exponentially, or discontinuously, in particular step-wise. According to a particularly preferred embodiment, the droplet volume is either the first or the second volume and the volume is thus adjusted step-wise to correspond either to the first or the second volume, depending on the distance. Thus, a relatively easy droplet volume adjustment advantageously leads to a strongly enhanced printing accuracy.

According to a preferred embodiment of the present invention, a droplet deposition density is adjusted such that a uniform layer thickness is maintained. This means e.g. that for a distance larger than a (first) threshold distance, a larger droplet volume is chosen, while at the same time, fewer droplets are deposited per area unit. The droplet deposition density is hence preferably a density of droplets deposited in a defined surface area. Thus, the total deposited volume per area unit, e.g. per mm², is constant. This is highly advantageous in order to produce precise optical structures of a constant thickness.

According to a preferred embodiment of the present invention, the position of the nozzle is adjusted vertically and/or horizontally. Preferably, if the distance between the nozzle and the corresponding predetermined location exceeds a first threshold distance, in addition to adjusting the droplet volume, the position of the nozzle is adjusted. It is thus advantageously possible to compensate in particular very large distances while maintaining a high printing accuracy by combining a nozzle position, in particular height, adjustment with the inventive droplet volume adjustment. Thus, the volume adjustment may e.g. be limited to two different volumes and/or the volume may only be slightly increased if simultaneously the initial distance is decreased by lowering the vertical position, i.e. the height, of the nozzle. The person skilled in the art acknowledges that this nozzle position adjustment may only be suitable in certain situations, since preferably the height of the nozzle is initially adjusted such that the nozzle is positioned just above the highest predetermined point of the layer. Thus, the optical structure may be printed without risking a collision between the nozzle and the substrate and/or already printed parts of the layer. This is particularly important for highspeed printing processes.

According to a preferred embodiment of the present invention, the droplet trajectory is curved or linear, in particular vertical. The droplets of printing ink are preferably ejected from the nozzle in a substantially vertical direction towards the substrate (or another suitable surface, such as an already printed layer). More preferably, the droplets of printing ink are ejected at an angle. Even more preferably, the predetermined trajectory is at least partially parabolic. Preferably, a controller determines the trajectory based upon a plurality of factors, such as density of the printing ink, droplet volume and/or weight, ambience temperature, ambient pressure, temperature of the printing ink, speed and/or orientation of the nozzle, etc. The controller controls the print head according to the print data and taking into account the predetermined droplet trajectory. It is thus advantageously possible to further enhance the printing accuracy.

According to a preferred embodiment of the present invention, the first volume comprises between 0.5 pl and 13 pl, preferably between 1 pl and 10 pl, more preferably between 2 pl and 8 pl, in particular 2 pl, and/or wherein the second volume comprises between 14 pl and 22 pl, preferably between 16 pl and 20 pl and in particular 18 pl. Preferably, the second volume is at least two times the first volume, more preferably less than three times the first volume.

According to a preferred embodiment of the present invention, the first threshold distance comprises 6 mm, preferably 5 mm, more preferably 4 mm, in particular 3 mm and/or wherein the second threshold distance comprises 10 mm, preferably 9 mm, more preferably 8 mm, in particular 7 mm. Preferably, the second threshold distance is at least two times the first threshold distance, more preferably less than three times the first threshold distance.

According to a preferred embodiment, the printed layer is a coating, in particular an anti-reflective coating and/or a hard coating, which in particular prevents damage to the optical structure from external influences. More preferably, the coating comprises a uniform thickness, in particular the coating comprises a constant thickness over its entire lateral extension. This is particularly advantageous, because in this way, the anti-reflective coating does not substantially influence the optical properties of the optical structure. Even more preferably, the coating comprises a lower thickness than the base structure. Additionally or alternatively, the coating provides shielding of the optical structure against ultraviolet radiation and/or color correction. It is herewith advantageously possible to protect the optical structure from external damaging and/or deteriorating influences, in particular mechanical, chemical or radiation influences. Alternatively, the layer printed in accordance with the method of the present invention is a structural layer, and subsequently, a coating, in particular an anti-reflective coating and/or a hard coating, is applied, in particular printed, on the outermost surface of the optical structure, in particular on the last structural layer.

A further subject matter of the present invention is a system for producing a three-dimensional optical structure, in particular an ophthalmic lens, comprising a print head and a controller for controlling the print head, wherein the print head comprises at least one nozzle, wherein the controller is configured to perform a method according to the present invention.

It is hence advantageously possible to provide a system for three-dimensionally printing an optical structure with high accuracy irrespective of the predetermined shape of the layer and/or the optical structure.

The embodiments and advantages described in conjunction with this subject matter of the present invention also apply to the further subject matter of the present invention and vice versa.

Preferably, the system includes a printer which comprises the print head. More preferably, the printer is a multi-jet printer. In particular, the printer comprises a plurality of print heads, wherein the controller preferably controls the print heads independently of each other.

According to a preferred embodiment of this subject matter of the present invention, the print head is controlled such that the droplets comprise a first volume if the distance between the nozzle and the corresponding predetermined location is smaller than or equal to a first threshold distance, wherein the droplets comprise a second volume if the distance between the nozzle and the corresponding predetermined location is greater than the first threshold distance and preferably smaller than or equal to a second threshold distance, wherein the second volume is greater than the first volume. It is thus advantageously possible to achieve a very high printing accuracy with as little as two different droplet volumes.

According to a preferred embodiment of this subject matter of the present invention, the first volume comprises between 0.5 pl and 13 pl, preferably between 1 pl and 10 pl, more preferably between 2 pl and 8 pl, in particular 2 pl, and/or wherein the second volume comprises between 14 pl and 22 pl, preferably between 16 pl and 20 pl and in particular 18 pl. Preferably, the second volume is at least two times the first volume, more preferably less than three times the first volume. By using two such different volumes, a great range of conditions can be covered, thus advantageously allowing for a high printing accuracy over a wide range of conditions.

According to a preferred embodiment of this subject matter of the present invention, the first threshold distance comprises 6 mm, preferably 5 mm, more preferably 4 mm, in particular 3 mm and/or wherein the second threshold distance comprises 10 mm, preferably 9 mm, more preferably 8 mm, in particular 7 mm. Preferably, the second threshold distance is at least two times the first threshold distance, more preferably less than three times the first threshold distance. These distances advantageously allow for a high printing accuracy even for very strongly curved layers.

According to a preferred embodiment of this subject matter of the present invention, the system comprises a, preferably movable, support, to which the substrate is attached during printing. More preferably, the support is rotatable and/or vertically and/or horizontally movable. Even more preferably, moving the support is carried out in addition to or alternative to moving the print head, in particular the at least one nozzle. Within the context of the present invention, a relative movement between the substrate and the print head occurs. Whether this is due to a movement of the support or to the movement of the nozzle (i.e. the print head) is less important. In particular in addition to the adjustment of the droplet volume, this advantageously allows for a very high printing accuracy.

### BRIEF DESCRIPTION OF THE DRAWINGS

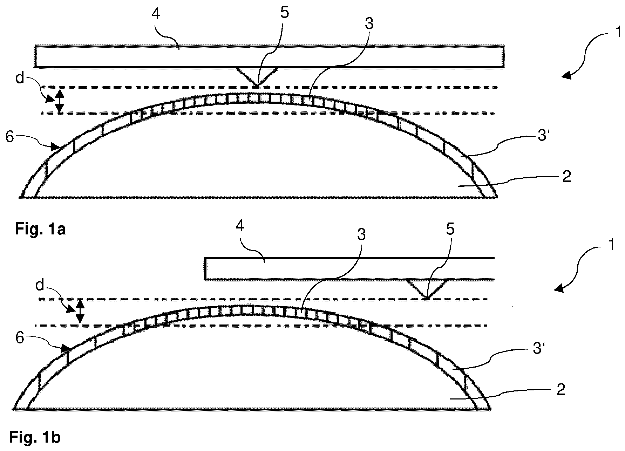

- Figures **1a** and **1b**: show an optical structure produced by a method according to an advantageous embodiment of the present invention.

### DETAILED DESCRIPTION

The present invention will be described with respect to a particular embodiment and with reference to the drawing, but the invention is not limited thereto but only limited by the claims. The drawing described herein is only schematic and are non-limiting. In the drawing, the sizes may be exaggerated and non-proportional and may not be drawn to scale for illustrative purposes.

Where an indefinite or definite article is used when referring to a singular noun, e.g. "a", "an", "the", this includes a plural of that noun unless something else is specifically stated.

In **Fig. 1a and 1b****,** an optical structure 1 produced by a method according to an advantageous embodiment of the present invention is schematically illustrated. The optical structure 1 may e.g. be an ophthalmic lens. According to the present invention, the optical structure 1 is produced by means of the additive manufacturing technique known as three-dimensional printing. Printing systems used for this technique are well known and are therefore not shown in all details within the drawings or explained in detail. Such a printing system usually comprises a printer, e.g. a multi-jet inkjet printer, with at least a print head 4 comprising at least one nozzle 5, preferably a plurality of nozzles, at least one reservoir for holding and providing a printing ink and a controller for controlling at least the print head 4 according to predetermined printing data. Such printing data may e.g. comprise slicing data. This means that a desired, i.e. predetermined, final shape of the optical structure 1 is determined, e.g. received as an input by user, and subsequently sliced into layers 6, wherein the controller controls the print head 4 such as to subsequently build up those layers 6 by ejecting droplets 3, 3' of printing ink from the nozzle(s) 5 along a predetermined trajectory and depositing these droplets 3, 3' of printing ink at least partially side by side. Subsequent layers are deposited in a similar manner at least partially on top of the previous layer 6.

The printing ink preferably comprises a photo-polymerizable monomer, which may be cured by irradiation, e.g. by ultraviolet (UV) light. Curing will initiate polymerization of the monomer and hence cause solidification. According to the specific layer shape and/or the specific requirements, a curing step can be performed after depositing a layer 6, after depositing parts of a layer and/or after finishing multiple layers.

Another well-known three-dimensional printing technique, which may be used in conjunction with the method according to the present invention is multi-pass printing. In a multi-pass printing mode, a layer 6 is divided into sublayers. During each pass of the print head 4 (e.g. a movement in one linear direction, wherein preferably moving back in the opposite direction constitutes another pass), a sublayer is printed. Thus, a layer 6 is printed in multiple substeps, wherein during each substep, a sublayer is printed. Each sublayer may be cured after printing or a curing step is performed after a predetermined number of substeps.

The droplets of printing ink 3, 3' constituting the layer 6 are deposited on a substrate 2. Thus, a smooth surface can be supplied in order to guarantee a high structural quality of the optical structure 1. Additionally, the substrate 2 may comprise a non-flat surface, which is in particular helpful when printing curved optical structures 1, e.g. bi-convex lenses. Even further, the substrate 2 may be fixed to a substrate support which is preferably movable, e.g. rotatable around a central axis and/or translatable along a vertical and/or horizontal direction.

Thus, the printing process may be supported by moving the substrate 2 via the substrate support alternatively to or additionally to moving the print head 4 and thus the nozzle 5.

The substrate 2 itself may be a special controllable substrate, e.g. a heatable and/or inflatable substrate, in order to provide a desired shape and/or other desired properties for an optimal production of the optical structure 1. In this case, it is preferred that after producing the optical structure 1, it is removed from the substrate 2. Alternatively, the substrate 2 may be a lens blank. This is advantageous for printing layers 6, in particular finishing layers such as a hard coating and/or an anti-reflective coating, on a traditionally produced lens blank. The substrate 2 could also be a base structure which in itself is produced by three-dimensional printing. E.g., in a first process, the base structure is printed on a (in particular flat) substrate 2 and in a subsequent process, at least one layer 6 is printed upon the base structure.

As it does not alter the inventive concept, the exact type of substrate is of minor importance in the presently discussed case. Therefore, a substrate 2 is generally shown as a curved object in **Fig. 1a** and **Fig. 1b**. Here, a layer 6 is already schematically indicated which is not to be understood such that the layer 6 is already printed at this stage, it rather illustrates the inventive concept.

Above the substrate 2, a print head 4 comprising at least one nozzle 5 is positioned at a distance therefrom which is preferably as small as possible but as large as necessary to avoid direct contact between the substrate 2 and/or the layer 6. The position in **Fig. 1a** illustrates this, as the nozzle 5 is arranged at a small vertical distance from the highest point of a finished layer 6 (whether or not it is already finished at this point). This is due to the fact that the print head 4 is usually arranged to be moved in a horizontal plane relative to the substrate at high speeds. Although a vertical adjustment is possible and even advantageous within the context of the present invention, it is not preferred as it impacts the printing data and therefore the printing accuracy and/or production time.

The nozzle 5 ejects the droplets of printing ink 3, 3' preferably vertically downwards along a substantially vertical trajectory. Alternatively, it is also possible that the nozzle 5 is arranged at an angle and/or ejects the droplets 3, 3' along an angled or even curved trajectory.

During the flight time of the droplets 3, 3' from the nozzle 5 to their predetermined locations (on the substrate and/or on an already printed part of the layer 6), they are subject to external influences. Depending on their volume, mass, density, temperature, etc., they are differently impacted by factors such as ambience temperature, ambience pressure, air streams, etc.

In **Fig. 1a**, the distance between the nozzle 5 and the predetermined location at which a droplet 3 which is ejected at this position lands, i.e. is deposited, is very small. In this case, external influences are neglectable and the print head may be controlled such that the droplet 3 comprises a first volume, which is preferably the ideal volume for high accuracy printing. Such droplets with a first volume 3 may therefore be deposited at all positions where the distance between the nozzle 5 and the predetermined location corresponding to a certain droplet is smaller than or equal to a first threshold distance d, which is schematically shown in **Fig. 1a**.

Here, the first volume is e.g. 7 picolitres (= 7 pl) and the first threshold distance is e.g. 3 mm. The droplets 3 comprising the first volume, which is relatively small, are indicated by small segments in the layer 6.

Yet, due to the predetermined shape of the layer 6, i.e. in particular due to the shape of the surface of the substrate 2, in the embodiment shown in **Fig. 1a** and **Fig. 1b****,** on the left and right side of the substrate the predetermined locations for the droplets lie below the first threshold distance d, i.e. the distance between the nozzle 5 and the corresponding predetermined locations is larger than the first threshold distance d, here e.g. 3 mm. This is illustrated in **Fig. 1b****,** in which the print head 4 has been moved to the right and the nozzle is located at a relatively high distance above the corresponding predetermined location for a droplet ejected at this position.

If a droplet 3 comprising the first volume as mentioned above, would be ejected at this position, it would be impacted by external influences and be subject to undesired effects. For a relatively small droplet 3 it is e.g. possible that during its flight along the trajectory, it nebulizes, i.e. breaks into a plurality of smaller subdroplets. For those subdroplets, an accurate trajectory may no longer be guaranteed and/or the predetermined deposition location is no longer applicable. Thus, the printing ink may be scattered around the predetermined location, such causing a low printing accuracy.

This is undesirable, in particular for optical structures such as ophthalmic lenses, which require the highest production precision. It has now been found by the inventors of the present invention, that a high printing accuracy may advantageously be maintained by adjusting the droplet volume according to the distance between the nozzle 5 and the corresponding predetermined location.

Furthermore, it has been found that surprisingly, a very high accuracy can already be achieved by using only two different droplet volumes 3, 3'. This is indicated in **Fig. 1a** and **Fig. 1b****,** where the droplets 3' which are deposited at predetermined locations which are located at distances which are greater than the first threshold distance d are depicted as larger segments.

By choosing a second, larger droplet volume 3', external influences are greatly reduced and accurate printing is achieved. In the present case, the second droplet volume 3' may e.g. be 18 pl, i.e. more than double of the first droplet volume 3.

Surprisingly, by selectively choosing either the first droplet volume 3 or the second droplet volume 3' depending on the whether the distance between the nozzle 5 and the predetermined location is greater or smaller than a first threshold distance, high printing accuracies may be achieved. In particular, the same printing ink is used and the only difference between the droplets 3, 3' is their respective volume.

Of course, as the person skilled in the art acknowledges, certain boundary conditions apply which are most commonly encountered when printing optical structures. E.g., if the distances between the nozzle 5 and the predetermined locations become very large, it may be necessary to define a second threshold distance and a third droplet volume. This may of course be repeated for a third threshold distance and a fourth droplet volume, etc.

It is particularly preferred if in addition to adjusting the droplet volume, the droplet deposition density is adjusted, in particular when increasing the droplet volume, the droplet deposition density is decreased. This means that for a defined surface area unit, less droplets are deposited. Since the droplet volume is higher per droplet, it is hence possible to maintain a constant and uniform layer thickness across the optical structure 1 by keeping the printing ink volume per surface area unit substantially constant.

Of course, the concept as explained above may be adjusted accordingly. E.g., it is conceivable that if the distance exceeds the first threshold distance, the second droplet volume is continuously increased depending on the distance between the nozzle 5 and the predetermined location. Thus, an ideal droplet volume 3 is defined for a well-defined distance range, i.e. for any distance smaller than (or equal to) the first threshold distance, wherein outside this range, the droplet volume is preferably adjusted dynamically, in particular depending on a multitude of factors and/or properties.

More generally, it is also possible that instead of defining a first threshold distance d, the droplet volume is adjusted continuously depending on the distance between the nozzle 5 and the predetermined location.

Yet, the embodiment illustrated in **Fig. 1a** and **Fig. 1b** and described in conjunction therewith above, it particularly preferred since it provides a relatively easy way of maintaining a high printing accuracy for typical conditions encountered when printing optical structures 1.

### REFERENCE SIGN LIST

- 1: optical structure
- 2: substrate
- 3: droplet (first volume)
- 3': droplet (second volume)
- 4: print head
- 5: nozzle
- 6: layer

- d: first threshold distance

## Claims

1. Method for producing a three-dimensional optical structure (1), in particular an ophthalmic lens, wherein at least one layer (6) is printed on a substrate (2) by depositing droplets (3, 3') of printing ink at predetermined locations, wherein the droplets (3, 3') are ejected by at least one nozzle (5) of a print head (4) along a trajectory towards the predetermined locations, wherein the print head (4), in particular the at least one nozzle (5), is controlled such that a volume of at least one, in particular each, droplet (3, 3') is adjusted in dependence of the distance between the nozzle (5) and the corresponding predetermined location, wherein in particular the volume is increased when the distance increases.

2. Method according to claim 1, wherein the droplets comprise a first volume (3) if the distance between the nozzle (5) and the corresponding predetermined location is smaller than or equal to a first threshold distance (d), and wherein the print head (4), in particular the at least one nozzle (5), is controlled such that the droplets comprise a second volume (3') if the distance between the nozzle and the corresponding predetermined location is greater than the first threshold distance (d) and preferably smaller than or equal to a second threshold distance, wherein the second volume (3') is greater than the first volume (3).

3. Method according to any one of the preceding claims, wherein during printing of the at least one layer (6), the droplets (3, 3') are deposited at least partially side by side and preferably at least partially on top of each other, wherein preferably successive layers (6) of printing ink are a least partially printed one above the other in consecutive printing steps.

4. Method according to any one of the preceding claims, wherein the substrate (2) comprises a curved upper surface on which the at least one layer (6) is printed and/or wherein the layer (6) is a curved layer.

5. Method according to any one of the preceding claims, wherein the substrate (2) is a lens blank, a printed base structure, a waveguide and/or a display.

6. Method according to any one of the preceding claims, wherein the print head (4) comprises multiple nozzles (5) which are preferably controlled at least partially independently of each other.

7. Method according to any one of the preceding claims, wherein the droplet (3, 3') volume is adjusted linearly, exponentially, or discontinuously, in particular step-wise.

8. Method according to any one of the preceding claims, wherein a droplet deposition density is adjusted such that a uniform layer thickness is maintained.

9. Method according to any one of the preceding claims, wherein the position of the nozzle (5) is adjusted vertically and/or horizontally.

10. Method according to any one of the preceding claims, wherein the droplet trajectory is curved or linear, in particular vertical.

11. Method according to any one of claims 2 to 10, wherein the first volume (3) comprises between 0.5 pl and 13 pl, preferably between 1 pl and 10 pl, more preferably between 2 pl and 8 pl, in particular 2 pl, and/or wherein the second volume (3') comprises between 14 pl and 22 pl, preferably between 16 pl and 20 pl and in particular 18 pl.

12. Method according to any one of claims 2 to 11, wherein the first threshold distance (d) comprises 6 mm, preferably 5 mm, more preferably 4 mm, in particular 3 mm and/or wherein the second threshold distance comprises 10 mm, preferably 9 mm, more preferably 8 mm, in particular 7 mm.

13. System for producing a three-dimensional optical structure (1), in particular an ophthalmic lens, comprising a print head (4) and a controller for controlling the print head (4), wherein the print head (4) comprises at least one nozzle (5), **characterized in that** the controller is configured to perform a method according to any one of the preceding claims.

14. System according to claim 13, **characterized in that** the print head (4) is controlled such that the droplets comprise a first volume (3) if the distance between the nozzle (5) and the corresponding predetermined location is smaller than or equal to a first threshold distance (d), wherein the droplets comprise a second volume (3') if the distance between the nozzle (5) and the corresponding predetermined location is greater than the first threshold distance (d) and preferably smaller than or equal to a second threshold distance, wherein the second volume (3') is greater than the first volume (3).

15. System according to any one of claims 13 or 14, **characterized in that** the first volume (3) comprises between 0.5 pl and 13 pl, preferably between 1 pl and 10 pl, more preferably between 2 pl and 8 pl, in particular 2 pl, and/or wherein the second volume (3') comprises between 14 pl and 22 pl, preferably between 16 pl and 20 pl and in particular 18 pl.

16. System according to any one of claims 14 or 15, **characterized in that** the first threshold distance (d) comprises 6 mm, preferably 5 mm, more preferably 4 mm, in particular 3 mm and/or wherein the second threshold distance comprises 10 mm, preferably 9 mm, more preferably 8 mm, in particular 7 mm.
